# EUROPEAN PATENT APPLICATION

(11) **EP 4 020 751 A1**
(43) Date of publication of application: **29.06.2022**
(21) Application number: 21211711.3
(22) Date of filing: 01.12.2021
(51) Int. Cl.: H02J 7/00

(54) **BATTERY CONTROL DEVICE AND MOBILE BATTERY**

(30) Priority: 23.12.2020 JP 2020213745
(71) Applicant: Prime Planet Energy & Solutions, Inc., Chuo-ku Tokyo 103-0022 (JP)
(72) Inventor: SUGIHARA, Atsushi, Tokyo, 103-0022 (JP); NAKAYAMA, Masato, Tokyo, 103-0022 (JP); NAGANO, Kodai, Tokyo, 103-0022 (JP); MASUOKA, Shizuka, Tokyo, 103-0022 (JP)
(74) Representative: Kuhnen & Wacker Patent- und Rechtsanwaltsbüro PartG mbB

(57) **Abstract**

To shorten a charge time to a battery. A battery control device includes: a discharge controller which controls a discharge from the battery; and a charge controller which controls a charge to the battery. The discharge controller is configured to be capable of performing at least a discharge from the battery to a lower limit SOC determined in advance which is higher than a pre-charge SOC determined in advance. The charge controller is configured to charge the battery at a second charge rate that is lower than a first charge rate determined in advance when a present SOC of the battery is lower than the pre-charge SOC and to charge the battery at the first charge rate when the present SOC of the battery is equal to or higher than the pre-charge SOC.

## Description

### BACKGROUND

The present invention relates to a battery control device and a mobile battery.

For example, WO 2014/156041 discloses a battery system which includes a plurality of battery units and which performs charge and discharge with respect to the battery units. In the battery system disclosed herein, charging the plurality of battery units includes an equilibrated charge mode and a normal charge mode. The normal charge mode is executed after the equilibrated charge mode.

In the equilibrated charge mode, for example, when a voltage difference is created among the plurality of battery units, a pre-charge is executed with respect to the plurality of battery units. The pre-charge in the equilibrated charge mode reduces the voltage difference among the plurality of battery units and enables voltage values of the respective battery units to be equalized. In the normal charge mode, a normal charge is performed with respect to the respective battery units, of which voltage values have been equalized in the equilibrated charge mode. Therefore, each battery unit can be fully charged while suppressing a variation in states of charge of the respective battery units.

In recent years, demand for portable terminals such as smartphones is growing. When a battery of a portable terminal runs out, a charge time of around 15 to 30 minutes is required to charge power necessary to continuously use the portable terminal for a certain amount of time such as power around SOC 25%. A portable mobile battery is also used to charge the portable terminal. Supposing that the battery of the portable terminal runs out, a charge to the portable terminal is performed by connecting the portable terminal to an electrical outlet or connecting the portable terminal to the mobile battery. In particular, when a user must be on the move, the mobile battery can be used to charge the portable terminal.

However, the mobile battery can also run out of power. When a charge capacity with respect to the portable terminal or the mobile battery diminishes, favorably, the portable terminal or the mobile battery can be quickly charged. For example, while applying the equilibrated charge mode and the normal charge mode disclosed in WO 2014/156041 to the mobile battery enables a charge to be performed, the charge takes time. When performing a quick charge, favorably, a charge time required until power necessary to use the portable terminal for a certain amount of time is reached is as short as possible.

### SUMMARY

A battery control device proposed herein includes: a discharge controller which controls a discharge from a battery; and a charge controller which controls a charge to the battery. The discharge controller is configured to be capable of performing at least a discharge from the battery to a lower limit SOC determined in advance which is higher than a pre-charge SOC determined in advance. The charge controller is configured to charge the battery at a second charge rate that is lower than a first charge rate determined in advance when a SOC of the battery is lower than the pre-charge SOC and to charge the battery at the first charge rate when the SOC of the battery is equal to or higher than the pre-charge SOC.

According to the battery control device proposed herein, during a charge to the battery, when the SOC of the battery is lower than the pre-charge SOC, the charge is performed at the relatively low second charge rate, but once the SOC of the battery becomes equal to or higher than the pre-charge SOC, the charge is performed at the relatively high first charge rate. In this case, since the pre-charge SOC is set lower than a lower limit SOC during a discharge, a charge at the relatively low second charge rate ends when the SOC of the battery is lower than the lower limit SOC. Therefore, since the time required by a charge at the relatively low second charge rate can be shortened, a total charge time including a charge at the first charge rate and a charge at the second charge rate can be shortened.

In the battery control device proposed herein, a difference between the pre-charge SOC and the lower limit SOC may range from SOC 5% to SOC 30%.

A mobile battery proposed herein includes: a casing; a battery which is arranged inside the casing and which can be charged at a charge rate equal to or higher than 5C; a power transmission unit which is arranged inside the casing; and a battery control device which is connected to the battery and to the power transmission unit. The battery control device includes: a discharge controller which controls a discharge from the battery; and a charge controller which controls a charge to the battery. The discharge controller is configured to be capable of performing a discharge from the battery to a lower limit SOC determined in advance which is higher than a pre-charge SOC determined in advance. The charge controller is configured to charge the battery at a second charge rate that is lower than a first charge rate determined in advance when a SOC of the battery is lower than the pre-charge SOC and to charge the battery at the first charge rate when the SOC of the battery is equal to or higher than the pre-charge SOC.

In the mobile battery proposed herein, the power transmission unit may include a wireless power transmission device.

### BRIEF DESCRIPTION OF THE DRAWINGS

FIG. 1 is a block diagram schematically showing a charging system according to an embodiment;
FIG. 2 is a flow chart showing procedures of control of discharge from a battery by a battery control device;
FIG. 3 is a graph showing a current value and a voltage value during discharge of a battery;
FIG. 4A is a flow chart showing procedures of control of charge to a battery by the battery control device;
FIG. 4B is a flow chart showing procedures of control of charge to a battery by the battery control device;
FIG. 5 is a graph showing a current value and a voltage value during charge of a battery; and
FIG. 6 is a block diagram schematically showing a charging system according to another embodiment.

### DETAILED DESCRIPTION

Hereinafter, an embodiment of the battery control device and the mobile battery disclosed herein will be described with reference to the drawings. It should be noted that the embodiments described herein naturally are not intended to limit the present invention. The present invention is not limited to the embodiments described herein unless specifically mentioned otherwise. It will be recognized that the respective drawings are merely schematic renderings and therefore do not necessarily reflect actual objects. In addition, members and portions that produce same effects will be described using same reference signs and overlapping descriptions will be omitted as deemed appropriate.

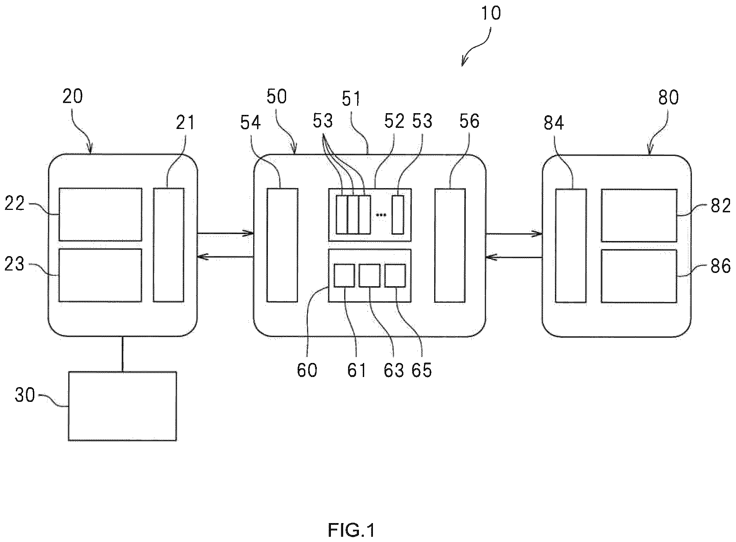

FIG. 1 is a block diagram schematically showing a charging system 10 according to the present embodiment. In the present embodiment, the battery control device and the mobile battery are realized by the charging system 10 shown in FIG. 1. First, a configuration of the charging system 10 will be described. The charging system 10 includes a power feeding device 20, a mobile battery 50, and a portable terminal 80. In the charging system 10, a quick charge is performed from the power feeding device 20 to the mobile battery 50. In addition, for example, the portable terminal 80 is charged using the charged mobile battery 50.

The power feeding device 20, the mobile battery 50, and the portable terminal 80 appropriately include a control device. The control device is an device for controlling various types of processing by each device. The control device can be embodied by a computer that is driven by a program determined in advance. Specifically, each function of the control device is processed by an arithmetic unit (also referred to as a processor, a CPU (Central Processing Unit), or an MPU (Micro-processing unit)) and a storage device (a memory, a hard disk, or the like) of each computer that constitutes the control device. For example, each component of the control device can be embodied as a database that stores data to be embodied by a computer in a format determined in advance, a data structure, a processing module that performs predetermined arithmetic processing in accordance with a program determined in advance, and the like or as a part thereof. The control devices built into the respective devices may be configured to communicate data and function in collaboration with each other.

The power feeding device 20 has a power feeding unit 21, a power supply unit 22, and a power feed control device 23. The power feeding unit 21 is configured to charge the mobile battery 50. For example, the power feeding unit 21 is capable of transmitting (in other words, capable of supplying) power to the mobile battery 50 and, favorably, capable of supplying power at high output. For example, the power feeding unit 21 is a wireless or, in other words, a contactless power feeding device. Alternatively, the power feeding unit 21 may be a contact-type power feeding device.

The power supply unit 22 is connected to an external power supply 30. The power supply unit 22 is a device which receives power from the external power supply 30 and which supplies power to external devices such as the mobile battery 50 and the portable terminal 80 via the power feeding unit 21. The external power supply 30 may be a 100-V or 200-V AC power supply. The power supply unit 22 may include an AC/DC converter.

The power feed control device 23 is electrically connected to the power feeding unit 21 and the power supply unit 22. The power feed control device 23 controls power that is supplied from the power feeding unit 21 to the mobile battery 50. In addition, the power feed control device 23 controls power that is received by the power supply unit 22 from the external power supply 30.

The mobile battery 50 includes a casing 51, a battery 52, a power reception unit 54, a power transmission unit 56, and a battery control device 60. The casing 51 has a predetermined internal space. The battery 52, the power reception unit 54, the power transmission unit 56, and the battery control device 60 are arranged inside the casing 51.

The battery 52 is designed to be capable of a quick charge and is constituted by a high-output battery. For example, battery technology that is applied to a power supply for driving a so-called hybrid vehicle is favorably transferred to the battery 52. The battery 52 is capable of performing charge at a charge rate of 5C or higher (for example, 8C or higher or 10C or higher). The battery 52 is favorably designed to minimize deterioration even when performing charge at a current value corresponding to a charge rate of 5C or higher.

In the present specification, a magnitude of a current that causes a theoretical capacity of the battery 52 to be fully charged or discharged in one hour is defined as 1C. For example, when the capacity of the battery 52 is 2 Ah, 1C equates to 2 A. 3C corresponds to a current value that is three times 1C and, in the example described above, signifies a current value at which the theoretical capacity is fully charged or discharged in 20 minutes. For example, when the charge rate of the battery 52 is 5C, charge of around 15% of the theoretical capacity can be realized by charge of around three minutes. Charge of around 25% of the theoretical capacity of the battery 52 can be realized by charge of around five minutes. In the future, as battery technology that is applied to a power supply for driving a hybrid vehicle is further applied, charge in an even shorter amount of time can be realized by an even higher charge current value. Therefore, it is expected that the battery 52 can be charged with required power merely within several to several ten seconds.

Although not illustrated, the mobile battery 50 according to the present embodiment may include a so-called high-capacity battery in addition to the high-output battery 52. For example, the high-capacity battery allows charge and discharge to be performed at a charge rate of around 1C to 3C. For example, the high-capacity battery has an energy density of around 400 Wh/L to 800 Wh/L.

In the present embodiment, the battery 52 has a battery cell 53. While the battery 52 may only have one battery cell 53, in this case, the battery 52 has a plurality of battery cells 53. The number of the battery cells 53 is not particularly limited. When there are a plurality of battery cells 53, the plurality of battery cells 53 may be either connected in series or connected in parallel.

Power is supplied to the power reception unit 54 from the power feeding unit 21 of the power feeding device 20. The power reception unit 54 is favorably capable of receiving high output. In this case, the power reception unit 54 includes a wireless power reception device. For example, power is supplied to the wireless power reception device from the power feeding unit 21 of the power feeding device 20 by a contactless power feeding (wireless power feeding) system. As the contactless power feeding system, an electromagnetic induction system, a magnetic field resonance system, an electric field coupling system, a radio wave reception system, or the like can be adopted. Alternatively, the power reception unit 54 may be a contact-type power receiving device.

The power transmission unit 56 is configured to charge the portable terminal 80 and is capable of transmitting power. The power transmission unit 56 includes a wireless power transmission device. For example, the wireless power transmission device supplies power to a terminal power reception unit 84 (to be described later) of the portable terminal 80 by a contactless power feeding (wireless power feeding) system. Alternatively, the power transmission unit 56 may be a contact-type power transmission device. In the present embodiment, a current value of a power feed from the power transmission unit 56 to the portable terminal 80 may be controlled so that, for example, power is fed at a current value kept low enough so as minimize deterioration of a built-in battery 82 (to be described later) of the portable terminal 80.

According to the mobile battery 50 described above, required power can be obtained in a short period of time by a quick charge from the power feeding device 20. Therefore, a user need not wait for a long time to be charged at a location where the power feeding device 20 is installed. In addition, power may be slowly fed from the mobile battery 50 to the portable terminal 80 at a current value determined so as to prevent the built-in battery 82 of the portable terminal 80 from deteriorating. For example, charge may be performed from the mobile battery 50 to the portable terminal 80 after charge has been performed from the power feeding device 20 to the mobile battery 50.

The battery control device 60 controls charge and discharge of the battery 52. Although not illustrated, the battery control device 60 includes a charge/discharge control circuit which controls charge and discharge of the battery 52 and a battery protection circuit which protects the battery 52 from being overcharged or over-discharged. The battery control device 60 is electrically connected to the battery 52, the power reception unit 54, and the power transmission unit 56. The battery control device 60 includes a storage 61, a discharge controller 63, and a charge controller 65. Details of the storage 61, the discharge controller 63, and the charge controller 65 will be provided later.

Examples of the portable terminal 80 include a smartphone, a mobile phone, a tablet terminal, and a mobile PC. The portable terminal 80 includes the built-in battery 82, the terminal power reception unit 84, and a terminal control device 86.

The built-in battery 82 is a battery to act as a power supply for supplying power to the portable terminal 80. The built-in battery 82 favorably has a required charge capacity that is needed to enable the portable terminal 80 to be continuously used for a certain amount of time.

The terminal power reception unit 84 is electrically connected to the mobile battery 50. The terminal power reception unit 84 includes a wireless power reception device such as that described above. Alternatively, the terminal power reception unit 84 may be a contact-type power receiving device. In this case, power is supplied from the power transmission unit 56 of the mobile battery 50 to the terminal power reception unit 84 to charge the built-in battery 82.

The terminal control device 86 is electrically connected to the built-in battery 82 and the terminal power reception unit 84. The terminal control device 86 controls power supplied through the terminal power reception unit 84 and, at the same time, controls charge to the built-in battery 82. In this case, for example, the terminal control device 86 has a charge control circuit which controls charge to the built-in battery 82 and a battery protection circuit which protects the built-in battery 82 from being overcharged.

Next, control of charge and discharge of the battery 52 by the battery control device 60 in the mobile battery 50 will be described. Hereinafter, charge and discharge of the battery 52 signify charge and discharge of the plurality of battery cells 53.

In the present embodiment, charge and discharge of the battery 52 are controlled based on a state of charge (hereinafter, referred to as a SOC) of the battery 52. In the following description, the SOC of the battery 52 at the present moment will be referred to as a present SOC.

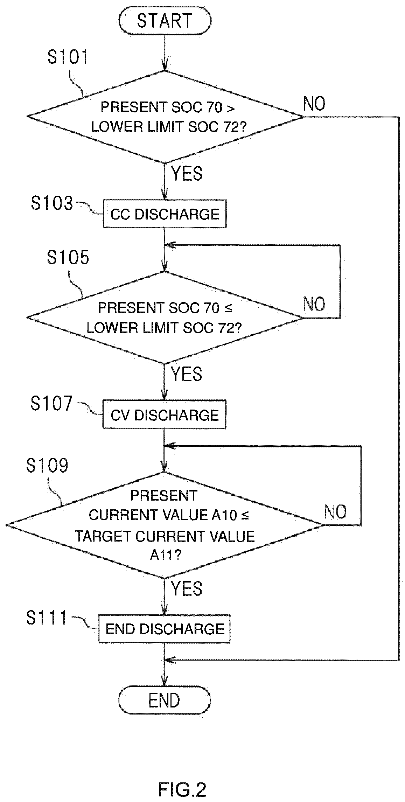

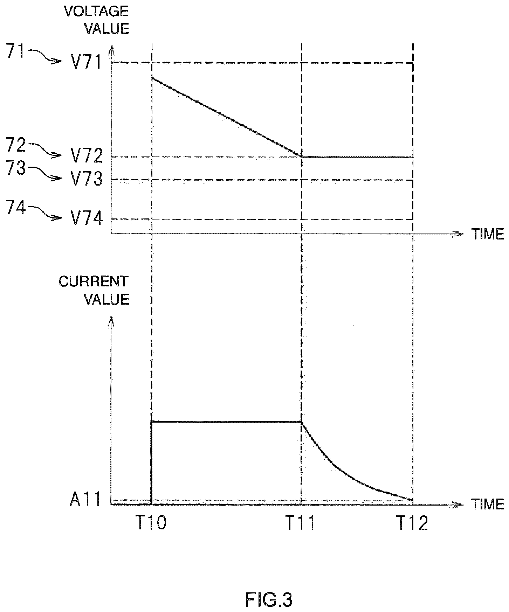

FIG. 2 is a flow chart showing procedures of control of discharge from the battery 52 by the battery control device 60. FIG. 3 is a graph showing a current value and a voltage value during discharge of the battery 52. Next, control of discharge from the battery 52 by the battery control device 60 will be described with reference to the flow chart shown in FIG. 2. In the present embodiment, as shown in FIG. 1, discharge of the battery 52 is performed when, for example, the power transmission unit 56 of the mobile battery 50 and the terminal power reception unit 84 of the portable terminal 80 are electrically connected to each other and, at the same time, charge is performed from the mobile battery 50 to the portable terminal 80. Discharge from the battery 52 is realized by the discharge controller 63 of the battery control device 60 shown in FIG. 1. The discharge controller 63 controls discharge from the battery 52.

In the present embodiment, as shown in FIG. 3, an upper limit SOC 71 determined in advance and a lower limit SOC 72 which is determined in advance and which is lower than the upper limit SOC 71 are set to the battery 52. The upper limit SOC 71 and the lower limit SOC 72 are stored in the storage 61 shown in FIG. 1. Specific numerical values of the upper limit SOC 71 and the lower limit SOC 72 are not particularly limited. For example, the upper limit SOC 71 ranges from SOC 80% to SOC 95%, favorably ranges from SOC 80% to SOC 90%, and particularly favorably ranges from SOC 80% to SOC 85%. For example, the lower limit SOC 72 ranges from SOC 0% to SOC 15%, favorably ranges from SOC 5% to SOC 15%, and particularly favorably ranges from SOC 10% to SOC 15%.

In this case, a voltage value of the battery 52 corresponding to the upper limit SOC 71 is referred to as an upper limit voltage value V71 and a voltage value of the battery 52 corresponding to the lower limit SOC 72 is referred to as a lower limit voltage value V72. In the following description, a SOC can be replaced with a voltage value. For example, the present SOC 70 (refer to FIG. 2), the upper limit SOC 71, and the lower limit SOC 72 can be respectively replaced with a present voltage value of the battery 52 (hereinafter, referred to as a voltage value of the battery 52), the upper limit voltage value V71, and the lower limit voltage value V72.

The discharge controller 63 shown in FIG. 1 controls discharge from the battery 52 until the present SOC 70 (refer to FIG. 2) at least becomes equal to the lower limit SOC 72. In other words, the discharge controller 63 controls discharge from the battery 52 until the voltage value of the battery 52 at least becomes equal to the lower limit voltage value V72. In the present embodiment, the lower limit SOC 72 is a lower limit value of the present SOC 70 when the battery 52 is discharged by a constant current (hereinafter, referred to as CC) discharge.

In this case, first, in step S101 shown in FIG. 2, the discharge controller 63 shown in FIG. 1 determines whether or not the present SOC 70 of the battery 52 is higher than the lower limit SOC 72. When it is determined at this point that the present SOC 70 is equal to or lower than the lower limit SOC 72, discharge from the battery 52 is not performed and the flow chart shown in FIG. 2 is ended.

On the other hand, when it is determined in step S101 that the present SOC 70 of the battery 52 is higher than the lower limit SOC 72, an advance is made to step S103. In step S103, the discharge controller 63 performs control of a CC discharge. For example, in FIG. 3, the CC discharge is started at a time T10.

Next, in step S105 shown in FIG. 2, during the CC discharge, the discharge controller 63 determines whether or not the present SOC 70 of the battery 52 is equal to or lower than the lower limit SOC 72. At this point, when it is determined that the present SOC 70 is still higher than the lower limit SOC 72, processing of step S105 is executed once again.

On the other hand, when it is determined in step S105 that the present SOC 70 is equal to or lower than the lower limit SOC 72, an advance is made to step S107. In FIG. 3, the present SOC 70 of the battery 52 becomes equal to or lower than the lower limit SOC 72 at a time T11. In step S107 shown in FIG. 2, the discharge controller 63 performs control of a constant voltage (hereinafter, referred to as CV) discharge from the battery 52.

Next, in step S109, during the CV discharge, the discharge controller 63 determines whether or not the current value of the battery 52 at the present moment (hereinafter, referred to as a present current value) A10 is equal to or lower than a target current value A11. The target current value A11 is stored in advance in the storage 61 shown in FIG. 1 and is appropriately set. At this point, when it is determined that the present current value A10 is still higher than the target current value A11, processing of step S109 is executed once again. On the other hand, when it is determined in step S109 that the present current value A10 is equal to or lower than the target current value A11, an advance is made to step Sill and the control of the discharge from the battery 52 ends. In FIG. 3, the present current value A10 becomes equal to or lower than the target current value A11 at a time T12 and the discharge from the battery 52 is ended.

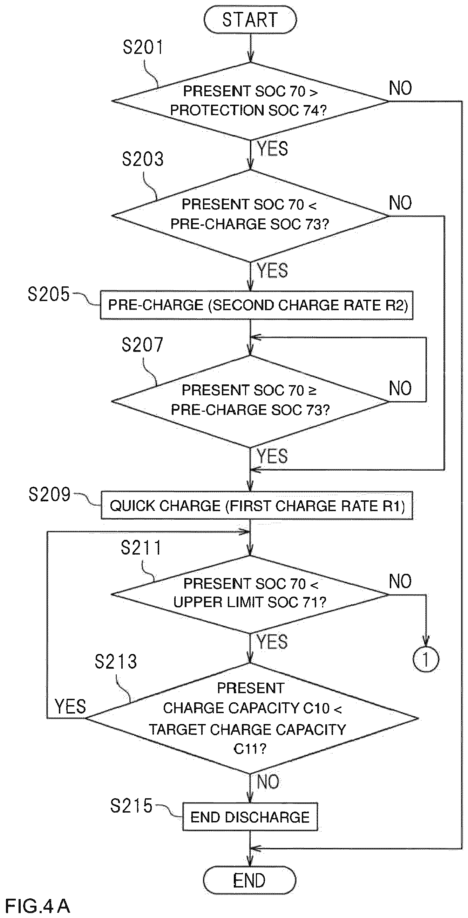

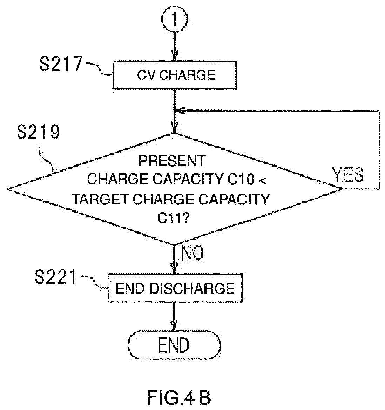

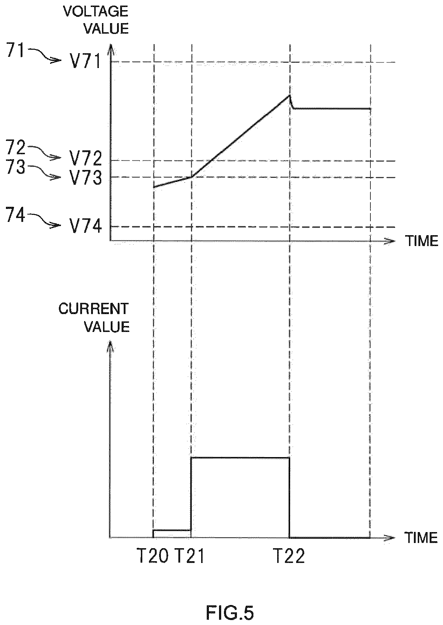

FIGS. 4A and 4B are flow charts showing procedures of control of charge to the battery 52 by the battery control device 60. FIG. 5 is a graph showing a current value and a voltage value during charge of the battery 52. Next, control of charge to the battery 52 will be described with reference to the flow charts shown in FIGS. 4A and 4B. In the present embodiment, as shown in FIG. 1, charge of the battery 52 is performed when the power feeding unit 21 of the power feeding device 20 and the power reception unit 54 of the mobile battery 50 are electrically connected to each other and, at the same time, charge is performed from the power feeding device 20 to the mobile battery 50. Control of charge to the battery 52 is realized by the charge controller 65. The charge controller 65 controls charge to the battery 52.

In the present embodiment, the charge controller 65 performs a pre-charge and a quick charge with respect to the battery 52. In this case, as shown in FIG. 5, a pre-charge SOC 73 determined in advance is set to the battery 52. A voltage value of the battery 52 that corresponds to the pre-charge SOC 73 is referred to as a pre-charge voltage value V73. In the following description, when a SOC is replaced with a voltage value, the pre-charge SOC 73 can be replaced with the pre-charge voltage value V73. The pre-charge SOC 73 is lower than the lower limit SOC 72 and is stored in the storage 61 shown in FIG. 1 in advance. For example, the pre-charge SOC 73 ranges from SOC 0% to SOC 15%, favorably ranges from SOC 0% to SOC 10%, and particularly favorably ranges from SOC 0% to SOC 5%. For example, a difference between the pre-charge SOC 73 and the lower limit SOC 72 ranges from SOC 5% to SOC 30%, favorably ranges from SOC 10% to SOC 30%, and particularly favorably ranges from SOC 15% to SOC 30%.

The charge controller 65 performs the pre-charge until the present SOC 70 becomes equal to the pre-charge SOC 73 determined in advance and subsequently performs a quick charge.

In this case, first, in step S201 shown in FIG. 4A, the charge controller 65 determines whether or not the present SOC 70 of the battery 52 is higher than a protection SOC 74. The protection SOC 74 as used herein refers to an upper limit value of the present SOC 70 when the battery 52 is in an over-discharged state. In other words, when the present SOC 70 is equal to or lower than the protection SOC 74, the battery 52 enters an over-discharged state. The protection SOC 74 is a value determined in advance and is stored in the storage 61 shown in FIG. 1 in advance. As shown in FIG. 5, the protection SOC 74 is lower than the pre-charge SOC 73. A voltage value of the battery 52 that corresponds to the protection SOC 74 is referred to as a protection voltage value V74. Hereinafter, when a SOC is replaced with a voltage value, the protection SOC 74 can be replaced with the protection voltage value V74.

In the present embodiment, in step S201 shown in FIG. 4A, when it is determined that the present SOC 70 of the battery 52 is equal to or lower than the protection SOC 74, charge to the battery 52 is favorably not performed. Therefore, when the present SOC 70 is equal to or lower than the protection SOC 74, charge to the battery 52 is not performed and the flow charts of FIGS. 4A and 4B are ended.

On the other hand, when it is determined in step S201 that the present SOC 70 is higher than the protection SOC 74, an advance is made to step S203 shown in FIG. 4A. In step S203, the charge controller 65 determines whether or not the present SOC 70 of the battery 52 is lower than the pre-charge SOC 73. At this point, when it is determined that the present SOC 70 is equal to or higher than the pre-charge SOC 73, a determination of NO is made in step S203. In this case, the control of a pre-charge to the battery 52 is not performed and an advance is made to the quick charge in step S209 shown in FIG. 4A.

On the other hand, when it is determined in step S203 that the present SOC 70 of the battery 52 is lower than the pre-charge SOC 73, an advance is made to step S205 shown in FIG. 4A. In step S205, in order to perform a pre-charge to the battery 52, the charge controller 65 performs control so as to perform charge (in this case, a CC charge) at a second charge rate R2. In FIG. 5, at a time T20, since the present SOC 70 of the battery 52 is lower than the pre-charge SOC 73, a pre-charge to the battery 52 is started.

Next, in step S207, during the pre-charge, the charge controller 65 determines whether or not the present SOC 70 is equal to or higher than the pre-charge SOC 73. At this point, when it is determined that the present SOC 70 is lower than the pre-charge SOC 73, processing of step S207 is executed once again and the pre-charge is continued.

On the other hand, when it is determined in step S207 that the present SOC 70 is equal to or higher than the pre-charge SOC 73, an advance is made to step S209 in order to end the pre-charge. In step S209, in order to perform a quick charge to the battery 52, the charge controller 65 performs control so as to perform charge at a first charge rate R1 that is higher than the second charge rate R2 in the pre-charge. The quick charge in this case is a CC charge. In FIG. 5, at a time T21, since the present SOC 70 of the battery 52 becomes equal to or higher than the pre-charge SOC 73, a quick charge is started.

In this case, for example, the first charge rate R1 in the quick charge ranges from 5C to 20C, favorably ranges from 10C to 20 C, and particularly favorably ranges from 15C to 20C. For example, the second charge rate R2 in the pre-charge ranges from 0.05C to 0.5C, favorably ranges from 0.1C to 0.5C, and particularly favorably ranges from 0.3C to 0.5C.

Next, in step S211 shown in FIG. 4A, the charge controller 65 determines whether or not the present SOC 70 of the battery 52 is lower than the upper limit SOC 71 during a quick charge. When the present SOC 70 is equal to or higher than the upper limit SOC 71, the battery 52 can be described as being in an overcharged state. At this point, when it is determined that the present SOC 70 is lower than the upper limit SOC 71, an advance is made to step S213.

In step S213, the charge controller 65 determines whether or not a present charge capacity C10 that is a charge capacity of the battery 52 at the present moment is smaller than a target charge capacity C11. The target charge capacity C11 is a charge capacity of the battery 52 to be obtained by a charge which is set for each battery 52. The target charge capacity C11 is stored in advance in the storage 61 shown in FIG. 1. When it is determined in step S213 that the present charge capacity C10 of the battery 52 is smaller than the target charge capacity C11, a return is made to step S211 to continue the quick charge.

On the other hand, when the present charge capacity C10 of the battery 52 is equal to or larger than the target charge capacity C11 in step S213, an advance is made to step S215, the quick charge ends, and the control of the charge to the battery 52 by the charge controller 65 is ended. In FIG. 5, at a time T22, the present charge capacity C10 becomes equal to or larger than the target charge capacity C11 and the charge to the battery 52 ends.

When it is determined in step S211 in FIG. 4A described above that the present SOC 70 of the battery 52 is equal to or higher than the upper limit SOC 71, since the battery 52 is in an overcharged state, an advance is made to step S217 in FIG. 4B. In step S217, the charge controller 65 switches from a CC charge to a CV charge in the quick charge to the battery 52.

Subsequently, in step S219 in FIG. 4B, the charge controller 65 determines whether or not the present charge capacity C10 of the battery 52 is smaller than the target charge capacity C11 in a similar manner to step S213 in FIG. 4A. When it is determined in step S219 that the present charge capacity C10 of the battery 52 is smaller than the target charge capacity C11, step S219 is executed once again to continue the CV charge.

On the other hand, when it is determined in step S219 that the present charge capacity C10 of the battery 52 is equal to or larger than the target charge capacity C11, an advance is made to step S221, the quick charge (CV charge) ends, and the control of the charge to the battery 52 by the charge controller 65 is ended.

Next, the present inventors prepared mobile batteries according to Examples 1 to 4 shown in Table 1 described below and measured a total charge time until a charge capacity of a battery included in the mobile batteries reaches the target charge capacity C11 (refer to FIG. 4A). In this case, the total charge time refers to a time that is a sum of a charge time required by a pre-charge and a charge time required by a quick charge.

In Examples 1 to 4, in a battery cell of the mobile batteries, a so-called NMC ternary lithium-containing transition metal composite oxide that contains nickel, manganese, and cobalt is used as a positive electrode active material, graphite is used as a negative electrode active material, polyethylene (PE) and polypropylene (PP) are used as a separator, and ethylene carbonate or ethyl methyl carbonate is used as an electrolyte solution. In Examples 1 to 4, a first charge rate R1 in a quick charge is 11 A and a second charge rate R2 in a pre-charge is 0.2 A.

The mobile battery 50 used in Examples 1 and 2 is constituted by the battery control device 60 which executes control of a charge by the charge controller 65 according to the present embodiment and, as shown in FIG. 5, the pre-charge SOC 73 is set lower than the lower limit SOC 72. In Examples 1 and 2, the upper limit SOC 71 is 85% and the upper limit voltage value V71 that corresponds to the upper limit SOC 71 is 3. 9 V. The lower limit SOC 72 is 5% and the lower limit voltage value V72 that corresponds to the lower limit SOC 72 is 3.3 V. The pre-charge SOC 73 is 0% and the pre-charge voltage value V73 that corresponds to the pre-charge SOC 73 is 3.0 V.

On the other hand, in the mobile battery used in Examples 3 and 4, while a configuration in which the pre-charge SOC and the lower limit SOC are set the same differs from the mobile battery 50 in Examples 1 and 2, other configurations are the same. In Examples 3 and 4, both the lower limit SOC and the pre-charge SOC are 5% and a corresponding voltage value is 3.3 V. In Examples 3 and 4, the upper limit SOC is the same 85% as the upper limit SOC 71 in Examples 1 and 2 and the corresponding upper limit voltage value is 3.9 V. In Examples 1 and 3, a start voltage of a charge is set to 3.0 V, and in Examples 2 and 4, a start voltage of a charge is set to 2.5 V.

A charge was performed with respect to the mobile batteries in Examples 1 to 4 and a total charge time of the charge was measured. Table 1 below shows the total charge times in Examples 1 to 4.

### [Table 1]

**Table 1**

| | Relationship between pre-charge SOC and lower limit SOC | Start voltage value | Total charge time |
|---|---|---|---|
| Example 1 | Pre-charge SOC < lower limit SOC | 3.0 V | 3 minutes 15 seconds |
| Example 2 | Pre-charge SOC < lower limit SOC | 2.5 V | 3 minutes 23 seconds |
| Example 3 | Pre-charge SOC = lower limit SOC | 3.0 V | 18 minutes |
| Example 4 | Pre-charge SOC = lower limit SOC | 2.5 V | 26 minutes |

As shown in Table 1, comparing Example 1 to Example 3 reveals that the total charge time is shorter in Example 1 than in Example 3. In addition, comparing Example 2 to Example 4 reveals that the total charge time is shorter in Example 2 than in Example 4. Conceivably, this is because setting the pre-charge SOC 73 lower than the lower limit SOC 72 in Examples 1 and 2 as in the present embodiment caused a timing at which a transition from a pre-charge to a quick charge occurs to be quickened as compared to Examples 3 and 4. As a result, in Examples 1 and 2, the total charge time has conceivably become shorter due to a shorter charge time in a pre-charge.

As described above, in the present embodiment, as shown in FIG. 1, the mobile battery 50 includes the casing 51, the battery 52, the power transmission unit 56, and the battery control device 60. The battery 52 is arranged inside the casing 51 and can be charged at a charge rate of 5C or higher. The power transmission unit 56 is arranged inside the casing 51. The battery control device 60 is connected to the battery 52 and the power transmission unit 56. The battery control device 60 includes: the discharge controller 63 which controls a discharge from the battery 52; and the charge controller 65 which controls a charge to the battery 52. As shown in FIG. 3, the discharge controller 63 is configured to be capable of performing a discharge from the battery 52 to the lower limit SOC 72 determined in advance which is higher than the pre-charge SOC 73 determined in advance. The charge controller 65 is configured to perform a charge of the battery 52 (refer to step S205 in FIG. 4A) at the second charge rate R2 that is lower than the first charge rate R1 determined in advance when the SOC (in this case, the present SOC 70) of the battery 52 is lower than the pre-charge SOC 73 as in step S203 in FIG. 4A. The charge controller 65 is configured to perform a charge of the battery 52 at the first charge rate R1 as in step S209 when the SOC (in this case, the present SOC 70) of the battery 52 is equal to or higher than the pre-charge SOC 73 as in step S207 in FIG. 4A.

In the present embodiment, during a charge to the battery 52, a pre-charge is performed at the second charge rate R2 when the present SOC 70 is lower than the pre-charge SOC 73 and a quick charge is performed at the first charge rate R1 when the present SOC 70 becomes equal to or higher than the pre-charge SOC 73. Conventionally, the pre-charge SOC 73 and the lower limit SOC 72 have been set to a same value as shown in Examples 3 and 4 described above. In other words, the SOC of the battery 52 when a CC charge ends and the SOC of the battery 52 when a quick charge starts are the same. Accordingly, since the charge time required by a pre-charge is longer, the total charge time of the battery 52 is also longer.

However, in the present embodiment, as shown in FIG. 5, the pre-charge SOC 73 is set lower than the lower limit SOC 72 during discharge. Therefore, charge to the battery 52 by a pre-charge ends when the present SOC 70 is lower than the lower limit SOC 72, more so than conventionally. Accordingly, since the charge time required by a pre-charge can be shortened, the total charge time of the battery 52 can be reduced.

It should be noted that, in the present embodiment, a pre-charge is performed in order to reduce a voltage difference among the plurality of battery cells 53 (refer to FIG. 1) included in the battery 52 and to equalize the voltage difference among the plurality of battery cells 53. Therefore, since a quick charge is performed with respect to the plurality of battery cells 53 of which voltage values have been equalized, the battery 52 can be set to a fully charged state while suppressing a variation in states of charge of the battery cells 53. In the present embodiment, as described above, setting the pre-charge SOC 73 lower than the lower limit SOC 72 as shown in FIG. 5 enables the charge time required by a pre-charge to be shortened. Even when the charge time required by a pre-charge is shortened, the voltage values of the plurality of battery cells 53 can be equalized by the pre-charge. Therefore, even in the present embodiment, the battery 52 can be charged in a stable manner.

In the present embodiment, a difference between the pre-charge SOC 73 and the lower limit SOC 72 ranges from SOC 5% to SOC 30%. For example, making the difference between the pre-charge SOC 73 and the lower limit SOC 72 smaller than SOC 5% causes the charge time required by a pre-charge to become relatively longer and, consequently, many users will feel that the total charge time of the battery 52 is long. For example, making the difference between the pre-charge SOC 73 and the lower limit SOC 72 larger than SOC 30% prevents the battery 52 from being stabilized by a pre-charge or, in other words, makes it difficult for voltage values of the plurality of battery cells 53 included in the battery 52 to be equalized. However, in the present embodiment, by setting the difference between the pre-charge SOC 73 and the lower limit SOC 72 to a range from SOC 5% to SOC 30%, the battery 52 can be stabilized or, in other words, the voltage values of the plurality of battery cells 53 included in the battery 52 can be readily equalized while shortening the charge time required by a pre-charge.

In the present embodiment, the power transmission unit 56 shown in FIG. 1 includes a wireless power transmission device. This enables, for example, power to be supplied from the power transmission unit 56 to the portable terminal 80 and charge to the portable terminal 80 (more specifically, the built-in battery 82) to be performed while the mobile battery 50 is being carried around. In addition, for example, the portable terminal 80 can be readily charged by arranging the mobile battery 50 within a predetermined range from the portable terminal 80 without regard to a state of connection between the mobile battery 50 and the portable terminal 80.

In the present embodiment, the battery 52 and the battery control device 60 are included in the mobile battery 50 and are realized by the mobile battery 50. However, the realization of the battery control device 60 is not limited to the realization by the mobile battery 50.

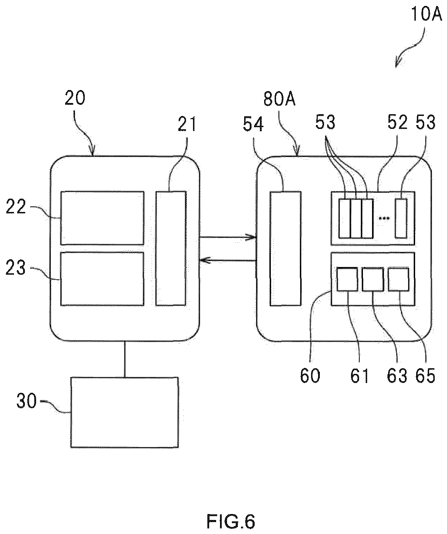

FIG. 6 is a conceptual diagram of a charging system 10A according to another embodiment. As shown in FIG. 6, the charging system 10A includes a power feeding device 20 and a portable terminal 80A. In the charging system 10A, a mobile battery 50 such as that shown in FIG. 1 is omitted. The portable terminal 80A includes a high-output battery 52, a power reception unit 54, and a battery control device 60. The battery 52, the power reception unit 54, and the battery control device 60 of the portable terminal 80A are respectively the same as the battery 52, the power reception unit 54, and the battery control device 60 of the mobile battery 50 shown in FIG. 1. In this manner, even in a case where the high-output battery 52, the power reception unit 54, and the battery control device 60 are included in the portable terminal 80A, a similar effect to the embodiment described above is produced.

## Claims

1. A battery control device (60), comprising:
a discharge controller (63) which controls a discharge from a battery (52); and
a charge controller (65) which controls a charge to the battery (52), wherein
the discharge controller (63) is configured to be capable of performing at least a discharge from the battery (52) to a lower limit SOC (72) determined in advance which is higher than a pre-charge SOC (73) determined in advance, and
the charge controller (65) is
configured to charge the battery (52) at a second charge rate (R2) that is lower than a first charge rate (R1) determined in advance when a SOC (70) of the battery (52) is lower than the pre-charge SOC (73) and
to charge the battery (52) at the first charge rate (R1) when the SOC (70) of the battery (52) is equal to or higher than the pre-charge SOC (73).

2. The battery control device (60) according to claim 1, wherein a difference between the pre-charge SOC (73) and the lower limit SOC (72) ranges from SOC 5% to SOC 30%.

3. A mobile battery (50), comprising:
a casing (51);
a battery (52) which is arranged inside the casing (51) and which can be charged at a charge rate equal to or higher than 5C;
a power transmission unit (56) which is arranged inside the casing (51); and
a battery control device (60) which is connected to the battery (52) and to the power transmission unit (56), wherein
the battery control device (60) includes:
a discharge controller (63) which controls a discharge from the battery (52); and
a charge controller (65) which controls a charge to the battery (52),
the discharge controller (63) is configured to be capable of performing a discharge from the battery (52) to a lower limit SOC (72) determined in advance which is higher than a pre-charge SOC (73) determined in advance, and
the charge controller (65) is
configured to charge the battery (52) at a second charge rate (R2) that is lower than a first charge rate (R1) determined in advance when a SOC (70) of the battery (52) is lower than the pre-charge SOC (73) and
to charge the battery (52) at the first charge rate (R1) when the SOC (70) of the battery (52) is equal to or higher than the pre-charge SOC (73).

4. The mobile battery (50) according to claim 3, wherein the power transmission unit (56) includes a wireless power transmission device.
